(19) Europäisches Patentamt

European Patent Office

Office européen des brevets

(11) **EP 1 436 493 B1**

(12) **EUROPÄISCHE PATENTSCHRIFT**

(45) Veröffentlichungstag und Bekanntmachung des Hinweises auf die Patenterteilung:
**01.03.2006 Patentblatt 2006/09**

(51) Int Cl.:
*F02D 41/14* *(2006.01)*       *F02P 5/15* *(2006.01)*
*F02D 37/02* *(2006.01)*

(21) Anmeldenummer: **02769920.6**

(22) Anmeldetag: **06.09.2002**

(86) Internationale Anmeldenummer:
**PCT/DE2002/003311**

(87) Internationale Veröffentlichungsnummer:
**WO 2003/033894 (24.04.2003 Gazette 2003/17)**

(54) **VERFAHREN UND VORRICHTUNG SOWIE COMPUTERPROGRAMM ZUR STEUERUNG EINES VERBRENNUNGSMOTORS**

METHOD AND DEVICE AND COMPUTER PROGRAM FOR CONTROLLING AN INTERNAL COMBUSTION ENGINE

PROCEDE, DISPOSITIF ET PROGRAMME INFORMATIQUE POUR COMMANDER UN MOTEUR A COMBUSTION INTERNE

(84) Benannte Vertragsstaaten:
**DE FR GB SE**

(30) Priorität: **08.10.2001 DE 10149477**

(43) Veröffentlichungstag der Anmeldung:
**14.07.2004 Patentblatt 2004/29**

(73) Patentinhaber: **ROBERT BOSCH GMBH**
**70442 Stuttgart (DE)**

(72) Erfinder:
• **HOCHSTRASSER, Patrick**
**71732 Tamm (DE)**
• **SAUER, Christina**
**71726 Benningen (DE)**
• **ESTEGHLAL, Gholamabas**
**71638 Ludwigsburg (DE)**
• **MALLEBREIN, Georg**
**70825 Korntal-Muenchingen (DE)**
• **KLEIN, Eberhard**
**73207 Plochingen (DE)**

(56) Entgegenhaltungen:
EP-A- 1 045 235        DE-A- 19 545 221
US-B1- 6 205 973       US-B1- 6 237 563

EP 1 436 493 B1

**Beschreibung**

Stand der Technik

Die Erfindung betrifft ein Verfahren und eine Vorrichtung sowie ein Computerprogramm zur Steuerung eines Verbrennungsmotors.

Aus der DE 42 39 711 A1 (US-Patent 5,558,178) ist zur Steuerung eines Verbrennungsmotors bekannt, einen Sollwert für ein Drehmoment des Verbrennungsmotors in eine Stellgröße zur Beeinflussung der Luftzufuhr zum Verbrennungsmotor, zum Einstellen des Zündwinkels und/oder zum Ausblenden bzw. Zuschalten der Kraftstoffzufuhr zu einzelnen Zylindern des Verbrennungsmotors umzusetzen. Darüber hinaus ist aus der WO-A 95/24550 (US-Patent 5,692,471) zusätzlich die Beeinflussung des Kraftstoff-/Luftverhältnisses zur Realisierung des vorgegebenen Drehmomentenwertes bekannt. Ferner wird bei den bekannten Lösungen das Istmoment des Verbrennungsmotors unter Berücksichtigung der aktuellen Motoreinstellung (Füllung, Kraftstoffzumessung und Zündwinkel) berechnet. Dabei werden u.a. Motordrehzahl, Last (Luftmasse, Druck, etc.) und ggf. die Abgaszusammensetzung herangezogen.

Im Rahmen dieser Berechnungen wird ein Momentenmodell für den Verbrennungsmotor verwendet, welches sowohl zur Bestimmung der Stellgrößen als auch zur Bestimmung der Istgrößen eingesetzt wird. Kernpunkt dieses Modells ist, daß betriebspunktabhängig Werte für ein optimales Drehmoment des Verbrennungsmotors und für einen optimalen Zündwinkel bestimmt werden, die dann mittels Wirkungsgradwerten entsprechend der aktuellen Einstellung des Verbrennungsmotors korrigiert werden.

Zur Optimierung dieses Modells ist aus der DE 195 45 221 A1 (US-Patent 5,832,897) vorgesehen, den Wert für den optimalen Zündwinkel abhängig von den Wirkungsgrad der Brennkraftmaschine beeinflussenden Größen wie Abgasrückführrate, Motortemperatur, Ansauglufttemperatur, Ventilüberschneidungswinkel, etc. zu korrigieren.

US6205973 offenbart ein Verfahren zur Ermittlung des Drehmoments einer Brennkraftmaschine mit Benzindirekteinspritzung, wobei abhängig von Betriebsgrössen mittels mindestens eines Modells das Drehmoment der Brennkraftmaschine berechnet wird, wobei auf der Basis von einen Arbeitspunkt der Brennkraftmaschine kennzeichnenden Betriebsgrössen aus einem vorgegebenen Kennfeld ein Wert für das maximale Drehmoment bestimmt wird, welches unter Normbedingungen erzielt werden würde, wobei für wenigstens eine momentenbeeinflussende Stellgrösse der Brennkraftmaschine ein Wirkungsgrad vorgegeben ist, der in Abhängigkeit des aktuellen Wertes dieser Grösse und ihres Normwertes gebildet wird und wobei zur Bestimmung des Istmoments das maximale Drehmoment mit diesem wenigstens einen Wirkungsgrad korrigiert wird.

In der Praxis hat es sich jedoch gezeigt, daß diese bekannte Lösung noch optimiert werden kann, insbesondere hinsichtlich der Einfachheit der Applikation, der Optimierung der Rechenzeit und/oder der Berücksichtigung der Arbeitspunktabhängigkeit der Korrektur des optimalen Zündwinkels, insbesondere der Abhängigkeit von der Inertgasrate. Insbesondere zeigt das bekannte Momentenmodell in einigen Betriebszuständen nicht zufriedenstellende Ergebnisse. Derartige Betriebszustände sind insbesondere Zustände mit hohen Inertgasraten, d.h. Zustände mit einem großen Anteil an Inertgas (durch externe oder innere Abgasrückführung), der durch Überschneidung von Ein- und Auslaßventilöffnungszeiten hervorgerufen wird und vor allem bei kleinen bis mittleren Frischgasfüllungen. Außerdem sind es Betriebszustände mit hoher Ladungsbewegung. Die berechneten Basisgrößen führen dazu, daß mit der bekannten Vorgehensweise eine genaue Momentberechnung nicht erreicht wird, da diese Effekte nicht ausreichend berücksichtigt sind.

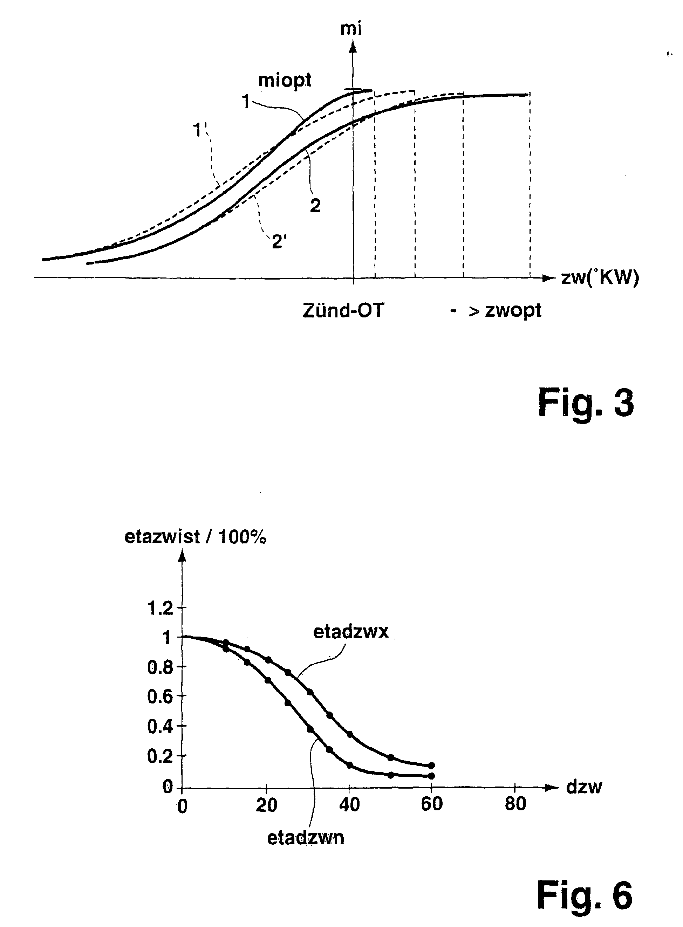

Eine weitere Schwierigkeit besteht darin, dass das bekannte Modell zwar wesentliche Einflüsse auf den Zündwinkel bei Bestimmung des maximalen Moments berücksichtigt, jedoch nicht die unterschiedliche Steilheit des Zusammenhangs zwischen Zündwinkel und dem im aktuellen Betriebspunkt des Motors erreichbarem maximalen Motormoment bei unterschiedlichen Gemischen. Bei der Optimierung des bekannten Modells muss also ein Kompromiss gefunden werden, der in der Regel darin besteht, dass der optimale Zündwinkel nicht mehr mit dem Zündwinkel des besten Moments zusammenfällt. So liegt bei sehr gut brennbaren Gemischen, die bei Erzeugung des besten Moments einen sehr späten Zündwinkel haben, der optimale Zündwinkel deutlich später als dieser Zündwinkel, während er bei schlecht brennbaren Gemischen deutlich früher liegt als der Zündwinkel, bei dem das maximale Moment erzeugt wird. Dieses Verhalten ist in Figur 3 skizziert. Dort ist gestrichelt die durch die Optimierung des bekannten Modells bereitgestellte Kurve dargestellt. Man sieht, dass Ist- und Modellkurve nicht mehr exakt übereinstimmen. In einem Anwendungsbeispiel hat sich bei bestmöglichem, optimalem Zündwinkel ein resultierender Momentenfehler von bis zu 20% ergeben, bezogen auf das optimale Moment $MI_{opt}$.

Es zeigt sich also, dass je größer die Steilheit der Zündhaken (Zusammenhang zwischen dem optimalen Zündwinkel $ZW_{opt}$ und dem Moment MI in Bezug auf den oberen Totpunkt der Zündungsphase Zünd-OT für einen Betriebspunkt des Motors) variiert, desto mehr weichen optimaler Zündwinkel und maximaler Zündwinkel, bei dem das maximale Moment erreicht wird, bei extrem gut und schlecht brennbaren Gemischen voneinander ab und desto größer werden die Fehler des Momentenmodells. Durch den bekannten Optimierer der Modellparameter gelingt es nicht, eine Bedatung des Modells, insbesondere des optimalen Zündwinkels, zu finden, so dass das Momentenmodell im gesamten Zündwinkelbereich eine geringe Toleranz aufweist.

Es besteht daher Bedarf an einer weiteren Optimierung des Momentenmodells, insbesondere mit Blick auf Motorsteuersysteme mit hohen Inertgasraten, beispielsweise bei Motorsteuersystemen mit variabler Ventilverstellung und/oder Ladungsbewegungsklappe.

Vorteile der Erfindung

Durch die Berücksichtigung von Inertgasraten und/oder Ladungsbewegungseffekten bei der Bestimmung des optimalen Moments im Rahmen eines Momentenmodells für einen Verbrennungsmotor wird eine Verbesserung, insbesondere eine Vereinfachung der Applizierung des Modells sowie eine Reduzierung der Rechenzeit erreicht. Ferner wird durch die Berücksichtigung des Betriebspunktes bei der inertgasratenabhängigen Korrektur des optimalen Zündwinkels die Arbeitspunktabhängigkeit dieser Korrektur berücksichtigt und das Drehmomentmodell deutlich verbessert.

Durch diese Maßnahme wird eine hohe Genauigkeit des mittels des Modells berechneten indizierten Motormoments auch bei hohen Ein- und Auslaßventilüberschneidungen und/oder hohen Inertgasraten bei kleinen Füllungen des Verbrennungsmotors erreicht. Daher ist das verbesserte Modell insbesondere geeignet für Verbrennungsmotoren mit kontinuierlich verstellbaren oder geschaltet verstellbaren Ein- und Auslaßventilen bzw. bei Verbrennungsmotoren mit externer Abgasrückführung.

In besonders vorteilhafter Weise wird eine hohe Momententreue erreicht, wenn z.B. über eine Schnittstelle zu einem Getriebesteuergerät eine Reduzierung des Zündwinkelwirkungsgrades angefordert wird.

Besonders vorteilhaft ist, dass ein Momentenmodell bereitgestellt wird, welches die Genauigkeit des Momentenmodells und die Übereinstimmung des optimalen Zündwinkels mit dem Zündwinkel des besten (maximalen) Moments deutlich verbessert. Besonders vorteilhaft ist, dass dieses Modell invertierbar ist, das heißt sowohl eine Berechnung eines Sollzündwinkels bei gegebenem Sollmoment und gegebener Füllung sowie die Berechnung einer Sollfüllung bei gegebenem Sollmoment und gegebenem Basiszündwinkelwirkungsgrad als auch eine Berechnung des Istmoments erlaubt.

In besonders vorteilhafter Weise zeichnet sich das Momentenmodell zur Berechnung des indizierten Motormoments durch eine hohe Genauigkeit auch bei stark unterschiedlichen Zündhaken aus und durch eine gute Übereinstimmung der Optimierungsgröße des optimalen Zündwinkels mit dem Zündwinkel bei bestmöglichem Moment.

Ferner wird eine einfache Applizierbarkeit des tatsächlich einzustellenden Basiszündwinkels erreicht und eine Tauglichkeit des Einsatzes des Modells für alle Motorkonfigurationen, das heißt für Motoren mit Abgasrückführung, variabler Nockenwellensteuerung, variablem Ventilhub, Ventilabschaltung und/oder Ladungsbewegungsklappe, ermöglicht.

Weitere Vorteile ergeben sich aus der nachfolgenden Beschreibung von Ausführungsbeispielen bzw. aus den abhängigen Patentansprüchen.

Zeichnung

Die Erfindung wird nachstehend anhand der in der Zeichnung dargestellten Ausführungsformen näher erläutert. In Figur 1 ist ein Ablaufdiagramm einer ersten Ausführung des verwendeten Modells dargestellt. Figur 2 zeigt ein Übersichtbild einer Motorsteuerung, bei der das skizzierte Modell Anwendung findet. Figur 3 zeigt ein Diagramm, bei welchem die Abhängigkeit des Motormoments MI vom optimalen Zündwinkel bei unterschiedlich brennbaren Gemischen sowie der durch Optimierung angenäherten Kurve in der beiden Fällen bei einem bekanntem Momentenmodell dargestellt ist. Figur 4 zeigt ein Ablaufdiagramm zur Berechnung des Wirkungsgrades etazwist, während in Figur 5 ein Ablaufdiagramm zur Bestimmung des Sollzündwinkels zwsoll dargestellt ist. Figur 6 zeigt ein Beispiel für verwendete Kennfelder zur Bestimmung des Zündwinkelwirkungsgrades, während in Figur 7 ein weiteres Ausführungsbeispiel des Momentenmodells zur Bestimmung eines Istmoments dargestellt ist.

Beschreibung von Ausführungsbeispielen

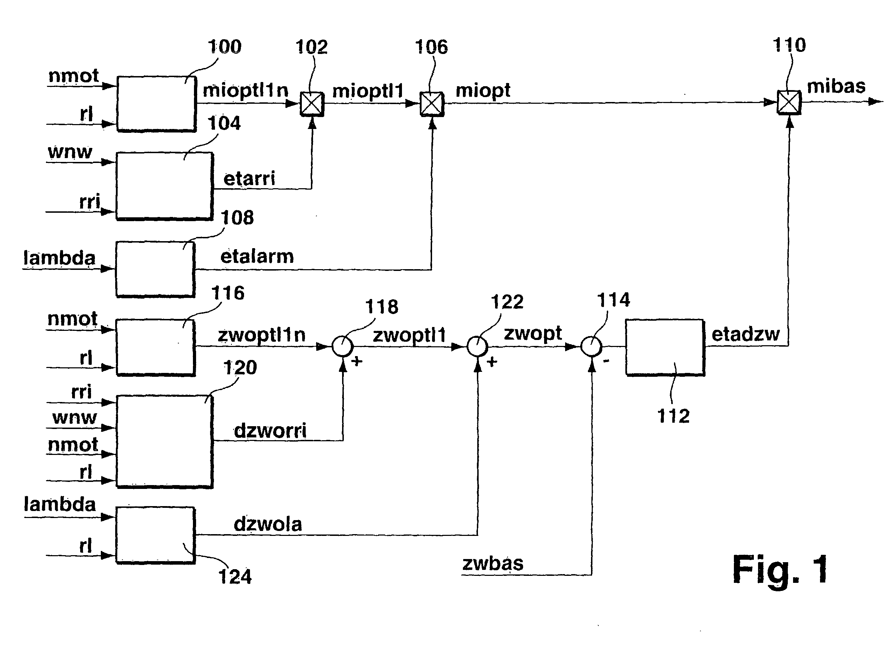

In Figur 1 ist ein Ablaufdiagramm eines ersten Ausführungsbeispiels zur Verbesserung des Momentenmodells dargestellt. Figur 1 beschreibt dabei ein Programm eines Mikrocomputers, wobei die einzelnen Elemente der Darstellung in Figur 1 Programme, Programmschritte oder Programmteile darstellen, während die Pfeile den Informationsfluß beschreiben. Dargestellt ist die Berechnung des Istbasismoments, d.h. das Moment, was sich bei Einstellen des Basiszündwinkels, der drehzahl- und lastabhängig aus einem Kennfeld ausgewählt wird, einstellt.

Wesentlich ist, daß bei dem in Figur 1 dargestellten Modell eine Korrektur des optimalen Momentenwertes unter Berücksichtigung der Inertgasrate sowie der Ladungsbewegung und eine Korrektur des optimalen Zündwinkelwertes unter Berücksichtigung der Inertgasrate und der Ladungsbewegung, somit des aktuellen Arbeitspunkts, stattfindet.

In einem ersten Kennfeld 100 wird abhängig von Motordrehzahl nmot und Istfüllung rl, die unter Berücksichtigung eines Saugrohrmodells aus dem gemessenen Luftmassenstrom bestimmt wird, ein Wert mioptlln für das optimale Drehmoment ausgelesen. Die Kennfeldwerte des Kennfeld 100 sind dabei unter definierten, optimalen Randbedingungen ermittelt, insbesondere wenn der Lambdawert einen Normwert (z.B. 1) aufweist, ein optimaler Zündwinkel eingestellt ist und der Wirkungsgrad etarri für die Ventilüberschneidung (Inertgasrate und Ladungsbewegung) einen Normwert (z.B. 1) aufweist. Der optimale Momentenwert wird in einer Multiplikationsstelle 102 mit dem Wirkungsgrad etarri multipliziert, der die Abweichung bezüglich der Ventilüberschneidung vom Normwert beschreibt. Der Wirkungsgradwert etrarri wird in dem Kennfeld 104 in Abhängigkeit von Signalen gebildet, die eine Inertgasrate durch interne und externe Abgasrückführung sowie die Ladungsbewegung repräsentieren. Als geeignet hat sich ein Signal rri für die interne und externe Inertgasrate erwiesen, welches in Abhängigkeit der Stellung des Abgasrückführventils und der Ein- und Auslaßventilstellung berechnet wird. Die Inertgasrate beschreibt dabei den Anteil des Inertgases an der gesamten angesaugten Gasmasse. Eine andere Art der Berechnung der Inertgasrate beruht auf der Temperatur des rückgeführten Abgasstromes, Lambda, der aktuellen Luftfüllung und dem Abgasdruck. Zur Berücksichtigung der Ladungsbewegung hat sich ein Signal wnw als geeignet erwiesen, welches den Öffnungswinkel (bezogen auf Kurbelwelle oder Nockenwelle) des Einlaßventils repräsentiert. In anderen Ausführungsbeispielen wird die Stellung einer Ladungsbewegungsklappe oder eine Größe herangezogen, die den Hub und die Phase der Öffnung der Einlaßventile repräsentiert.

Abhängig von diesen Istgrößen wird der Wirkungsgrad etarri bestimmt, der die durch Inertgas und Ladungsbewegung zustandekommenden Abweichungen im Momentenwert von dem unter Normbedingungen ermittelten Momentenwert, der der Bestimmung des Kennfeldes 100 zugrunde liegt, beschreibt. Der durch die Korrektur in der Multiplikationsstelle 102 gebildete optimale Momentenwert mioptl1 wird in einer weiteren Multiplikationsstelle 106 mit dem Lambdawirkungsgrad etalam multipliziert. Dieser wird in einer Kennlinie 108 abhängig von der aktuellen Abgaszusammensetzung Lambda ermittelt. Ergebnis ist ein optimaler Momentenwert miopt der den aktuellen Betriebszustand des Verbrennungsmotors und dessen Abweichung von den Normwerten, der bei der Bestimmung der optimalen Momentenwerte zugrundegelegt wird, berücksichtigt. miopt ist somit der optimale Wert für das indizierte Moment bei optimalem Zündwinkel. Zur Bildung des Basismomentes mibas, aus dem dann das Istmoment abgeleitet werden kann, ist somit die Basiszündwinkeleinstellung in Bezug auf die optimale Zündwinkeleinstellung zu berücksichtigen. Dies erfolgt in der Multiplikationsstelle 110, in dem der optimale Momentenwert miopt mit dem Zündwinkelwirkungsgrad etadzw korrigiert wird.

Der Zündwinkelwirkungsgrad etadzw wird aus einer Kennlinie 112 in Abhängigkeit der in 114 gebildeten Abweichung zwischen Basiszündwinkel zwbas und optimalem Zündwinkel zwopt gebildet. Der Wirkungsgrad etadzw bestimmt daher die Auswirkung der Abweichung des Basiszündwinkels vom optimalen Zündwinkelwert auf das Moment des Verbrennungsmotors. Der Basiszündwinkel entspricht dabei dem Zündwinkel, der in Abhängigkeit von Drehzahl und Last aus einem Basiszündwinkelkennfeld ausgelesen wird. Er entspricht nicht notwendigerweise dem tatsächlich eingestellten Zündwinkel, der bei der Bestimmung des Istmomentes in Abhängigkeit des Basismomentes in Form eines weiteren Wirkungsgrades zu berücksichtigen ist. Der optimale Zündwinkelwert wird in Abhängigkeit von Motordrehzahl nmot und Füllung rl aus dem Kennfeld 116 ausgelesen. Der ausgelesene optimale Zündwinkelwert zwoptl1n wird einer Verknüpfungsstelle 118 zugeführt, in der dieser Wert mit dem Korrekturwert dzworri korrigiert wird. Dieser Korrekturwert wird in einem Kennfeld 120 gebildet in Abhängigkeit der Inertgasrate rri, des Signals wnw zur Berücksichtigung der Ladungsbewegung, sowie von den aktuellen Betriebspunkt,repräsentierenden Signalen Motordrehzahl nmot und Istfüllung rl. Der auf diese Weise korrigierte optimale Zündwinkelwert zwoptl1 wird in einer weiteren Verkrlüpfungsstelle 122 mit einem Korrekturwert dzwola korrigiert. Dieser stellt einen Lambdakorrekturwert dar, der im Kennfeld 124 in Abhängigkeit von Lambda und Istfüllung RL ermittelt wird. Die Korrekturen in den Verknüpfungsstellen 118 und 122 werden vorzugsweise durch Addition durchgeführt. Diese Vorgehensweise hat sich als geeignet erwiesen, da dann auch bei den Korrekturwerten der aktuelle Betriebspunkt des Verbrennungsmotors berücksichtigt werden muß. Der in 122 sich ergebende Wert zwopt stellt den optimalen Zündwinkelwert dar, der in der Verknüpfungsstelle 114 mit dem Basiszündwinkel verglichen wird.

Durch das beschriebene Modell werden auch die oben genannten Betriebszustände mit hohen Inertgasraten und Ladungsbewegungen und kleinen bis mittleren Frischgasfüllungen zufriedenstellend beherrscht. Wesentlich ist hierbei, daß im Momentenmodell eine Korrektur des optimalen Zündwinkels und eine Korrektur des optimalen Momentes stattfindet. Der optimale Zündwinkel setzt sich dabei zusammen aus einem last- und drehzahlabhängigen Grundwert und additiven Korrekturen in Abhängigkeit der Inertgasrate, der Ein- bzw. Auslaßventilstellung bzw. der Ventilüberschneidung, von Lambda, Last und Drehzahl. Das optimale Moment setzt sich zusammen aus einer last- und drehzahlabhängigen Grundgröße und multiplikativen Korrekturen abhängig von der Inertgasrate und der Ein- und Auslaßventilstellung, von Lambda und vom Zündwinkelwirkungsgrad in Bezug auf den Basiszündwinkel.

Zur Bestimmung der Parameter des Modells wird ein Softwaretool eingesetzt, welches in der Lage ist, aus den gemessenen Eingangsgrößen und dem gemessenen Moment die Parameter des Modells so zu optimieren, daß das Fehlerquadrat über die gesamte Meßpunkte am kleinsten bleibt. Ein Beispiel für ein solches Softwaretool ist aus der DE 197 45 682 A1 bekannt.

Das mittels des Modells bestimmte Basismoment mibas wird auf verschiedene Weise weiterverarbeitet. Unter Berücksichtigung des Wirkungsgrads der tatsächlichen Zündwinkeleinstellung wird das Istmoment berechnet. Eine andere Auswertung besteht in der Bestimmung der Zündwinkeleinstellung, wobei der Unterschied zwischen Sollmoment und Basismoment zur Korrektur der Zündwinkeleinstellung herangezogen werden kann.

Das in Figur 1 beschriebene Modell zeigt die Berechnung des Istmoments aus verschiedenen Betriebsgrößen. Durch Umkehrung des Modells wird analog zum Modell des eingangsgenannten Stand der Technik das Modell auch zur Bestimmung der Stellgrößen (z.B. Zündwinkel, Lambda, etc.) abhängig vom Sollmomentenwert oder von der Abweichung zwischen Sollmoment und Basismoment oder Istmoment verwendet.

Das Modell lässt sich auch wie folgt formulieren:

$$mibas = f1(nmot,rl)*f21(rri)*f22(wnw)*f3(\Box)*f4(zwopt-zwbas)$$

oder bezogen auf das Istmoment:

$$miist = f1(nmot,rl)*f21(rri)*f22(wnw)*f3(\Box)*f4(zwopt-zwist)$$

Mit einer Umkehrung des Modells lassen sich dann Stellgrößen ableiten, z.B. einen Zündwinkelsollwert zwsoll:

$$zwsoll = zwopt - f4^{-1}[misoll/(f21(rri)*f22(wnw)*f3(\Box))]$$

Die zur Berechnung des Modells verwendeten Kennfelder und Kennlinien werden im Rahmen der Applikation für jeden Motortyp ggf. unter Verwendung des oben erwähnten Softwaretool, bestimmt.

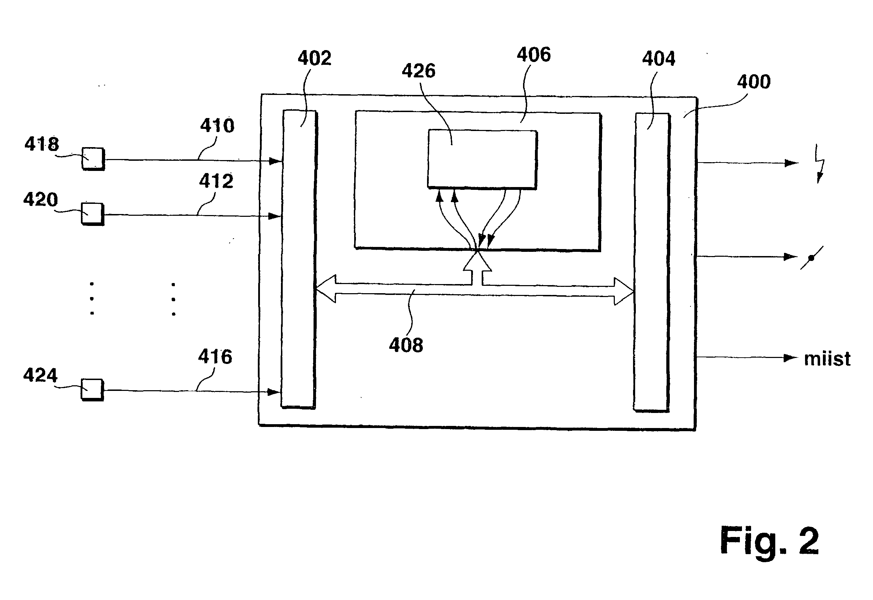

Figur 2 zeigt eine Steuereinheit 400, welche eine Eingangsschaltung 402, eine Ausgangsschaltung 404 und einen Mokrocomputer 406 umfasst. Diese Komponenten sind mit einem Bussystem 408 verbunden. Über Eingangsleitungen 410 und 412 bis 416 werden die zur Motorsteuerung auszuwertenden Betriebsgrößen, die von Messeinrichtungen 418, 420 bis 424 erfasst werden zugeführt. Die zur Modellbereichnung notwendigen Betriebsgrößen sind dabei oben dargestellt. Die erfassten und ggf aufbereiteten Betriebsgrößensignalen werden dann über das Bussystem 408 vom Mikrocomputer eingelesen. Im Mikrocomputer 406 selbst, dort in seinem Speicher sind die Befehle als Computerprogramm abgelegt, die zu Modellberechnung verwendet werden. Dies ist in Figur 2 mit 426 symbolisiert. die Modellergebnisse, die ggf noch in anderen, nicht dargestllten Programmen weiterverarbeitet werden, werden dann vom Mikrocomputer über das Bussystem 408 der Ausgangsschaltung 404 zugeführt, welche dann Ansteuersignal als Stellgrößen z.B. zur Einstellung des Zündwinkels und der Luftzufuhr sowie Messgrößen wie z.B. das Istmoment MI$_{ist}$ ausgibt.

Das oben beschriebene Momentenmodell berücksichtigt zwar Betriebszustände mit hoher Inertgasrate und Ladungsbewegungseffekten, berücksichtigt jedoch nicht die variierende Steilheit der Zündhaken. Entscheidend für die Umsetzung von chemischer in mechanische Energie (indiziertes Moment) ist der Verbrennungsschwerpunkt, das heißt der Kurbelwellenwinkel, an dem z.B. die Hälfte der Verbrennungsenergie umgesetzt ist. Messungen zeigen, dass dieser Kurbelwellenwinkel weitgehend unabhängig von der Motordrehzahl, der Motorlast und dem Restgasgehalt ist und als allgemeiner Zusammenhang zwischen Verbrennungsschwerpunkt und indiziertem Moment darstellbar ist. Die bestmögliche Umsetzung von chemischer Energie wird dabei bei einem Verbrennungsschwerpunkt von 8° Kurbelwellenwinkel nach dem oberen Totpunkt erreicht.

Ferner gilt der folgende weitere Zusammenhang. Eine Verschiebung des Zündwinkels um einen bestimmten Winkelbetrag nach spät verzögert auch den Verbrennungsschwerpunkt. Diese Verzögerung ist jedoch nicht konstant. Wird zum Beispiel eine sehr frühe Zündung (60° Kurbelwellenwinkel vor OT) um 10° verzögert, so trifft der Zündfunke zu einer Zeit ein, wo durch die Kompression in der Zwischenzeit Druck und Temperatur signifikant erhöht sind. Die Entflammung läuft folglich schneller, die Spätzündung um 10° ergibt nur eine Verzögerung des Verbrennungsschwerpunkts um einige Grad (zum Beispiel 4°). Dies bedeutet, dass auch das innere Moment des Motors trotz Spätzündung um 10° nur geringfügig abgenommen hat. Dies ist klassischerweise bei Betriebspunkten mit sehr schlecht brennbarem Gemisch (wenig Frischgasfüllung, viel Restgasfüllung, niedrige Brennraumtemperatur, wenig Ladungsbewegung) der Fall. Bei sehr gut brennbarem Gemisch (hohe Ladungsbewegung, viel Frischgasfüllung, wenig Restgasfüllung, hohe Brennraumtemperatur) ist kein früher Zündwinkel nötig. Der Zündwinkel für maximales Moment liegt in der Gegend von 5°-10° vor dem oberen Totpunkt. Wird jetzt 10° später gezündet, so profitiert die Entflammungsphase nicht mehr von steigendem Druck und Temperatur. Findet die Entflammung erst bei herablaufendem Kolben statt, so wird die Druckaufbaugeschwindigkeit bei der einsetzenden Energieumsetzung verringert, die Entflammung verzögert und der Verbrennungsschwerpunkt um mehr als nur die Zündwinkelverschiebung nach spät verschoben. Der Zündwinkelhaken (Zusammenhang zwischen Moment und Zündwinkel bei unterschiedlichen optimalen Zündwinkeln) ist deutlich steiler.

Somit liegt bei gegebenem Gemisch und gegebenen Randbedingungen (Ladungsbewegung, Temperatur) die Steilheit des Zündwinkelhakens von dem Zündwinkel ab, bei dem sich das maximale Moment ergibt. Mit anderen Worten: liegt der bestmögliche Zündwinkel früh, so ergibt sich ein flacher Zündhaken, liegt er spät, ein steilerer Zündhaken. Dieses Verhalten wird bei der Momentenmodellbildung durch die Verwendung einer Größe, die für die Zündwilligkeit des Gemisches typisch ist und die daraus abgeleitete Auswahl einer mehr oder weniger steilen Momentencharakteristik aus wenigstens zwei vorgegebenen Charakteristiken berücksichtigt. Ein Beispiel für eine solche Größe ist der optimale Zündwinkel. Unter Ausnutzung dieser Erkenntnis wird das nachfolgende Momentenmodell gebildet.

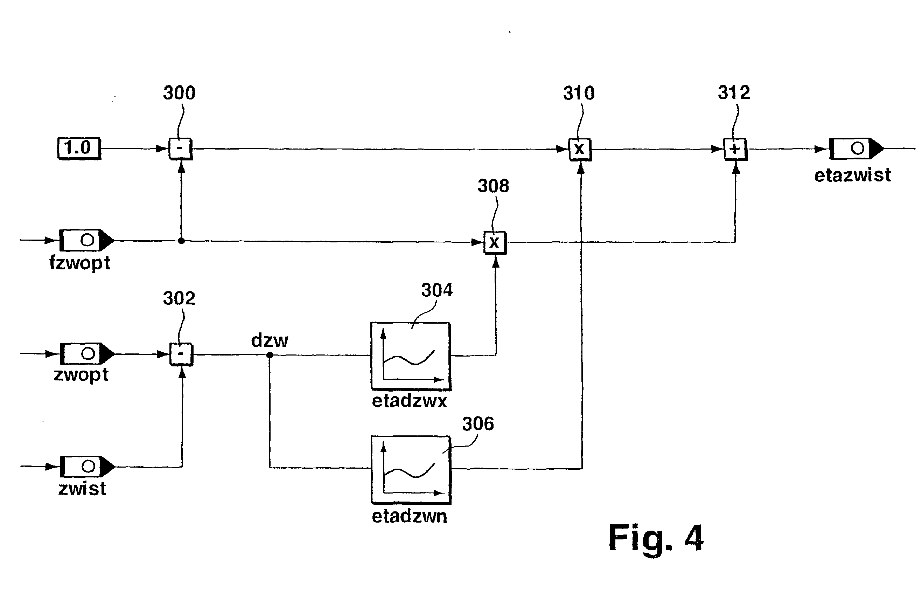

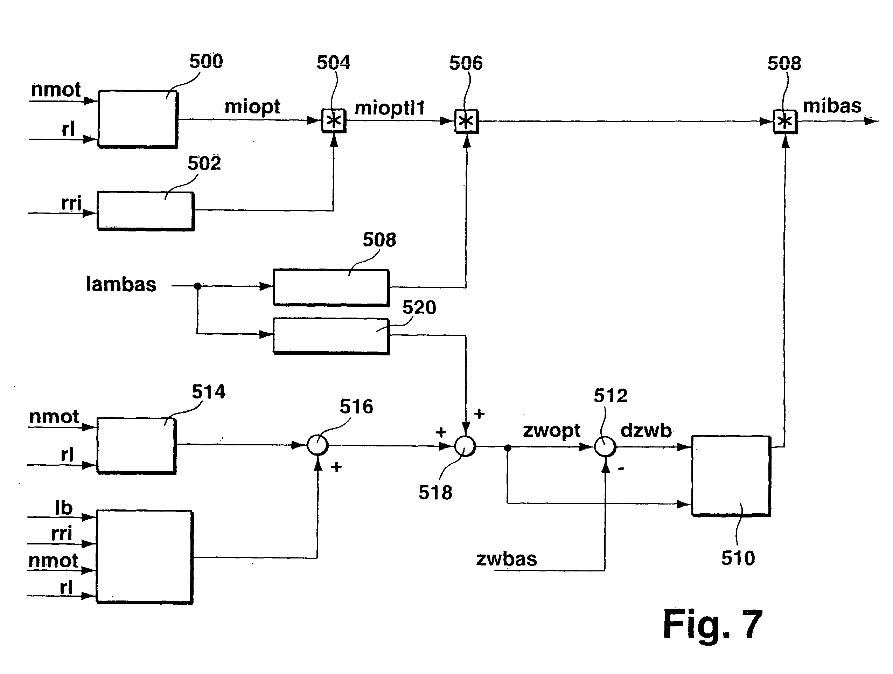

Im Ablaufdiagramm der Figur 4 repräsentieren die einzelnen Blöcke Programmschritte, Programmteile oder Programme, während die Verbindungslinien den Informationsfluss darstellen. Es ist die Berechnung des Zündwinkelwirkungsgrades etazwist dargestellt. Dieser Wirkungsgrad beschreibt die Abweichung des Istzündwinkels zwist vom optimalen Zündwinkel und die Auswirkung dieser Abweichung auf das Moment. Um die vorstehend beschriebenen Zusammenhänge zu berücksichtigen, sind zwei Charakteristiken etadzwn und etazwdx vorgesehen. Die Charakteristiken stellen dabei Kennlinien des Wirkungsgrades über der Abweichung zwischen Istzündwinkel und optimalem Zündwinkel dar. Die eine Charakteristik (etadzwn) ist dabei steil, die andere (etadzwx) flach. Ein Beispiel für solche Kennlinien zeigt Figur 6, in der die beiden Kennlinien dargestellt sind. Dabei ist die flachere Kennlinie für einen frühen optimalen Zündwinkel, die steilere für einen späten optimalen Zündwinkel zu verwenden. Um dies auch bei der Bestimmung des Istzündwinkels zur Geltung zu bringen, ist ferner vorgesehen, einen Faktor fzwopt zu bilden. Dieser wird aus dem optimalen Zündwinkel und zwei applizierbaren Zündwinkelgrößen ZWOPTMN und ZWOPTMX ermittelt, beispielsweise aus einer Verhältnisbildung des aktuellen optimalen Zündwinkels zu den beiden applizierbaren Größen. In einem Ausführungsbeispiel haben sich 0° Kurbelwellenwinkel für den Zündwinkelwert ZWOPTMN, 60° Kurbelwellenwinkel für den Zündwinkelwert ZWOPTMX als geeignet erwiesen.

Der auf diese Weise gebildete Faktor fzwopt wird gemäß Figur 4 in einer Subtraktionsstelle 300 zunächst vom Wert 1 abgezogen. In einer weiteren Subtraktionsstelle 302 wird die Abweichung zwischen optimalem Zündwinkel zwopt, der aus einem wie eingangs dargestellten Kennfeld gebildet wird, sowie des aktuell eingestellten Zündwinkels zwist gebildet. Diese Abweichung DZW wird der Kennlinie 304 (etadzwx) und der Kennlinie 306 (etadzwn) zugeführt. Aus diesen beiden Kennlinien wird jeweils ein Wirkungsgradwert für die einzelnen vorgesehenen optimalen Zündwinkel ausgelesen. Der Wert des Kennfeldes 304 wird in der Multiplikationsstufe 308 mit dem Faktor fzwopt multipliziert, während der Zündwinkelwirkungsgrad der Kennlinie 306 in der Multiplikationsstufe 310 mit dem um den Faktor fzwopt verminderten Wert 1 multipliziert wird. Diese beiden Größen werden dann in der Additionsstelle 112 zum Zündwinkelwirkungsgrad etazwist addiert. Somit ergibt sich für den Zündwinkelwirkungsgrad:

$$\texttt{etazwist = etadzwx * fzwopt + (etadzwn * (1-fzwopt))}$$

Liegt somit der optimale Zündwinkel zwopt in der Gegend des kleineren Zündwinkelwertes ZWOPTMN, so wird als Momentencharakteristik die steilere Kennlinie etadzwn verwendet. bei sehr frühen optimalen Zündwinkeln geht der Faktor fzwopt gegen 1 und es kommt die flachere Kennlinie etadzwmx zur Wikrung. Zwischen den Extremwerten werden die Kennlinienbeiträge gewichtet zur Bestimmung des Zündwinkelwirkungsgrades verwendet.

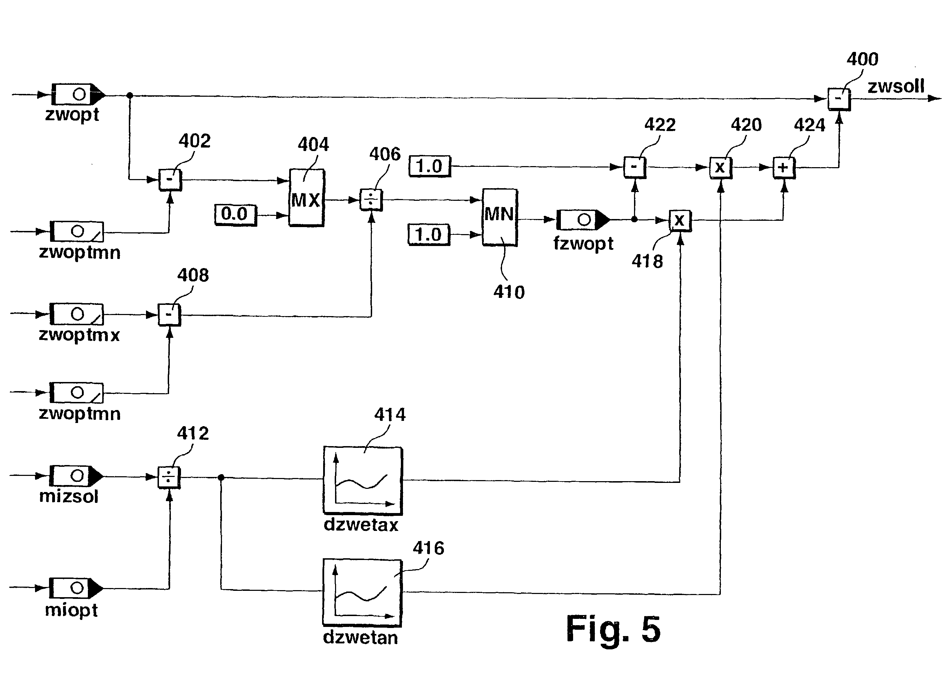

Figur 5 zeigt die Bildung des Sollzündwinkels zwsoll, bei der auch eine bevorzugte Ausführungsform zur Berechnung des Faktors fzwopt dargestellt ist. Auch bei diesem Ablaufdiagramm repräsentieren die einzelnen Blöcke Programmschritte, Programmteile oder Programme, während die Verbindungslinien den Informationsfluss darstellen. Zunächst wird der optimale Zündwinkel eingelesen. Dieser wird einer ersten Subtraktionsstelle 400 und einer zweiten Subtraktionsstelle 402 zugeführt. In letzterer wird von ihm der applizierbare Zündwinkelwert ZWOPTMN abgezogen. Die Differenz wird einer Maximalwertauswahlstufe 404 zugeführt, deren zweiter Eingang mit dem Wert Null belegt ist. Der größere der beiden Werte wird dann als resultierende Größe einer Divisionsstelle 406 übermittelt. In dieser Divisionsstelle wird der in der dritten Subtraktionsstelle 408 gebildete Differenzenwert zwischen den applizierbaren Größen ZWOPTMX und ZWOPTMN durch den resultierenden Wert dividiert. Das Ergebnis wird einer Minimalwertauswahlstufe 410 übermittelt, in der der kleinere aus den Werten 1 und dem Ergebnis aus 406 als Faktor fzwopt ausgegeben wird. Ferner wird der Momentensollwert mizsoll sowie das optimale Moment miopt (aus einem Kennfeld) eingelesen. In der Divisionsstelle 412 wird der Momentensollwert durch das optimale Moment dividiert und zwei Kennlinien 414 und 416 zugeführt. Diese Kennlinien DZWETAX und DZWETAN sind zwei Kennlinien, die den Zündwinkel über der Momentenabweichung darstellen. Auch hier ist die eine Kennlinie für einen frühen und die andere für einen späten optimalen Zündwinkel vorgegeben. Sie entsprechen den Kennlinien der Figur 6. Die beiden von den Kennlinien ermittelten Zündwinkelwerte werden zum einen in der Multiplikationsstelle 418 mit dem Faktor fzwopt multipliziert, zum anderen in der Multiplikationsstelle 420 mit dem in der Divisionsstelle 422 gebildeten Wert (1-fwzopt) multipliziert. Die auf diese Weise gewichteten Zündwinkelgrößen werden in der Additionsstelle 424 addiert und in der Subtraktionsstelle 400 vom optimalen Zündwinkel zwopt abgezogen. Ergebnis ist der Sollzündwinkel zwsoll, welcher zur Einstellung des vorgegebenen Sollmomentes einzustellen ist.

Auch hier werden die Werte der beiden Kennlinien 414 und 416 abhängig von der Wahl des optimalen Zündwinkels zu den Grenzwerten wie oben erwähnt gewichtet.

In Figur 7 ist ein Ablaufdiagramm für ein Momentenmodell unter Verwendung der oben genannten Zusammenhänge für einen Basisbetriebspunkt dargestellt. Neben der Differenz aus optimalem Zündwinkel und Basiszündwinkel (Istzündwinkel) geht auch noch die Größe zwopt als Beispiel für eine Größe zur Charakterisierung der Brennbarkeit des Gemisches in den Block zur Berechnung des Zündwinkelwirkungsgrades ein.

Wie oben erwähnt wird im Kennfeld 500 abhängig von Motordrehzahl Nmot und Istfüllung rl sowie in der Kennlinie 502 in Abhängigkeit der Inertgasrate rri ein Wirkungsgrad gebildet, welcher in der Multiplikationsstelle 504 mit dem im Kennfeld 500 gebildeten optimalen Momentenwert multipliziert wird. Der daraus ermittelte optimale Momentenwert mioptll wird in einer Multiplikationsstelle 506 mit einem LambdaWirkungsgrad multipliziert. Dieser wird in der Kennlinie 508 in Abhängigkeit des Basis-Lambdawertes lambas gebildet, welcher im jeweiligen Betriebspunkt ohne ggf. von aussen vorgegebene Korrekturen einzustellen ist. Das Ergebnis der Multiplikation in 506 wird einer weiteren Multiplikation in 508 unterzogen, in der der Momentenwert mit dem Zündwinkelwirkungsgrad etazwist, der in 510 gebildet wird, multipliziert wird. Ergebnis ist das Basismoment mibas für den aktuellen Betriebspunkt. Entsprechend der oben genannten Darstellung wird der Zündwinkelwirkungsgrad in Abhängigkeit der in 512 gebildeten Differenz zwischen optimalem Zündwinkel zwopt und Basiszündwinkel zwbas sowie dem direkt zugeführten optimalen Zündwinkel zwopt bestimmt. Der optimale Zündwinkelwert wird dabei in einem Kennfeld 514 abhängig von Motordrehzahl und Füllung gebildet, dieser optimale ZÜndwinkel in einer Summationsstelle 516 abhängig von einem in Abhängigkeit der Ladungsbewegung LB, der Inertgasrate rri, der Motordrehzahl Nmot und der Füllung rl bestimmten Korrekturwert korrigiert. Der korrigierte optimale Zündwinkel wird in einer weiteren Korrekturstelle 518 mit einem Lambda-Wert abhängigen Korrekturwert korrigiert, der in der Kennlinie 520 in Abhängigkeit des Basis-Lambdawertes gebildet wird. Der auf diese Weise korrigierte, optimale Zündwinkelwert zwopt wird dann zur Bildung des Zündwinkelwirkungsgrades in 510 und zur Bestimmung des Istmomentes ausgewertet.

Anstelle der oben beschriebenen Wichtung mit zwei Momentencaharkteristiken werden in anderen Ausführung mehr als zwei Momentencharakteristiken vorgegeben und entsprechend ausgewertet.

**Patentansprüche**

1. Verfahren zur Steuerung eines Verbrennungsmotors, bei welchem ein Momentenmodell eingesetzt wird, mit dessen Hilfe wenigstens eine Momenten-Istgröße und/oder wenigstens eine Stellgröße des Verbrennungsmotors in Abhängigkeit einer Vorgabegröße berechnet wird, wobei das Modell wenigstens eine Basisgröße umfasst, die unter vorgegebenen Normbedingungen bestimmt ist und die in Abhängigkeit der tatsächlichen Einstellung des Verbrennungsmotors korrigiert wird, wobei diese Basisgröße ein optimales Moment darstellt, welches mit einem Wirkungsgrad für die Umsetzung der chemischen in mechanische Energie korrigiert wird, und wobei dieser Wirkungsgrad in Abhängigkeit von der Zündwinkelabweichung zwischen einem optimalen Zündwinkel und einem aktuellen Zündwinkel und einer weiteren, die Brennwilligkeit des Gemisches repräsentierende Größe bestimmt wird, **dadurch gekennzeichnet, dass** die die Brennwilligkeit repräsentierende Größe der optimale Zündwinkel ist, und dass zur Bildung des Wirkungsgrades unterschiedliche Charakteristiken des Wirkungsgrades über der Zündwinkelabweichung verwendet werden, die in Abhängigkeit der Lage des optimalen Zündwinkels unterschiedlich gewichtet zur Bestimmung des Wirkungsgrades beitragen.

2. Verfahren nach Anspruch 1, **dadurch gekennzeichnet, dass** der optimale Zündwinkel abhängig von Frischluftfüllung, Motordrehzahl und mindestens einer weiteren Größe bestimmt wird.

3. Verfahren nach einem der vorherigen Ansprüche, **dadurch gekennzeichnet, dass** die weitere Größe die Inertgasrate, Lambda, eine Größe für die Ladungsbewegung ist.

4. Verfahren nach einem der vorherigen Ansprüche, **dadurch gekennzeichnet, dass** das optimale Drehmoment des Verbrennungsmotors unter Berücksichtigung der Inertgasrate und Ladungsbewegungseffekten korrigiert wird.

5. Verfahren nach Anspruch 4, **dadurch gekennzeichnet, dass** die Korrektur des optimalen Drehmoments abhängig von der Inertgasrate sowie der Ein- und Auslassventilstellungist.

6. Verfahren nach einem der vorherigen Ansprüche, **dadurch gekennzeichnet, dass** der optimale Zündwinkel abhängig von der Inertgasrate und/oder Ladungsbewegungseffekten, und dem aktuellen Arbeitspunkt des Verbrennungsmotors korrigiert wird.

7.  Verfahren nach einem der vorhergehenden Ansprüche, **dadurch gekennzeichnet, dass** der optimale Zündwinkel in Abhängigkeit der Inertgasrate und der Ein- bzw. Auslassventilstellung bzw. der Ventilüberschneidung sowie dem aktuellen Betriebspunkt des Verbrennungsmotors korrigiert wird.

8.  Verfahren nach einem der vorhergehenden Ansprüche, **dadurch gekennzeichnet, dass** ferner eine Korrektur des optimalen Zündwinkels in Abhängigkeit des Lambdawertes und der aktuellen Last stattfindet.

9.  Vorrichtung zur Steuerung eines Verbrennungsmotors, mit einer Steuereinheit, in welcher ein Momentenmodell für den Verbrennungsmotor abgelegt ist, mit dessen Hilfe wenigstens eine Istgröße ermittelt und/oder aus einem Vorgabewert wenigstens eine Stellgröße ermittelt wird, wobei im Rahmen des Modells wenigstens eine Basisgröße vorgesehen ist, die unter Normbedingungen festgelegt ist und die in Abhängigkeit der Abweichung von diesen Normbedingungen korrigiert wird, wobei die Basisgröße ein optimales Drehmoment ist, welches mit einem Wirkungsgrad für die Umsetzung der chemischen in mechanisch Energie korrigiert wird, und wobei dieser Wirkungsgrad abhängig von der Zündwinkelabweichung zwischen einem optimalen Zündwinkel und einem aktuellen Zündwinkel sowie einer weiteren, die Brennwilligkeit bestimmenden Größe bestimmt wird, **dadurch gekennzeichnet, dass** die die Brennwilligkeit repräsentierende Größe der optimale Zündwinkel ist, und dass zur Bildung des Wirkungsgrades unterschiedliche Charakteristiken des Wirkungsgrades über der Zündwinkelabweichung verwendet werden, die in Abhängigkeit der Lage des optimalen Zündwinkels unterschiedlich gewichtet zur Bestimmung des Wirkungsgrades beitragen.

10.  Computerprogramm mit Programmcodemitteln, um alle der Schritte von jedem beliebigen der Ansprüche 1 bis 8 durchzuführen, wenn das Programm auf einem Computer ausgeführt wird.

11.  Computerprogrammprodukt mit Programmcodemitteln, die auf einem computerlesbaren Datenträger gespeichert sind, um das Verfahren nach jedem beliebigen der Ansprüche 1 bis 8 durchzuführen, wenn das Programmprodukt auf einem Computer ausgeführt wird.

**Claims**

1.  Method for controlling an internal combustion engine, which uses a torque model, with the aid of which at least one torque actual variable and/or at least one control variable of the internal combustion engine is calculated as a function of a preset variable, the model comprising at least one base variable, which has been determined under predetermined standard conditions and is corrected as a function of the current setting of the internal combustion engine, this base variable representing an optimum torque which is corrected by an efficiency for the conversion of the chemical energy into mechanical energy, and this efficiency being determined as a function of the ignition angle deviation between an optimum ignition angle and a current ignition angle and a further variable which represents the ignitability of the mix, **characterized in that** the variable which represents the ignitability is the optimum ignition angle, and **in that** different characteristics of the efficiency over the ignition angle deviation are used to form the efficiency, which characteristics make a differently weighted contribution to the determination of the efficiency depending on the position of the optimum ignition angle.

2.  Method according to Claim 1, **characterized in that** the optimum ignition angle is determined as a function of the fresh-air charge, the engine speed and at least one further variable.

3.  Method according to one of the preceding claims, **characterized in that** the further variable is the inert gas rate, lambda, or a variable for the charge movement.

4.  Method according to one of the preceding claims, **characterized in that** the optimum torque of the internal combustion engine is corrected taking account of the inert gas rate and charge movement effects.

5.  Method according to Claim 4, **characterized in that** the correction of the optimum torque is dependent on the inert gas rate and also the intake and exhaust valve positions.

6.  Method according to one of the preceding claims, **characterized in that** the optimum ignition angle is corrected as a function of the inert gas rate and/or charge movement effects and the current working point of the internal combustion engine.

7.  Method according to one of the preceding claims, **characterized in that** the optimum ignition angle is corrected as a function of the inert gas rate and the intake and exhaust valve positions or the valve overlap, as well as the current operating point of the internal combustion engine.

8.  Method according to one of the preceding claims, **characterized in that** the optimum ignition angle is also corrected as a function of the lambda value and the current load.

9.  Device for controlling an internal combustion engine, having a control unit, in which a torque model for the internal combustion engine is stored, with the aid of which model at least one actual variable is determined and/or at least one control variable is determined from a preset value, within the scope of which model there is at least one base variable, which has been defined under standard conditions and is corrected as a function of the deviation from these standard conditions, the base variable being an optimum torque, which is corrected by the efficiency for the conversion of the chemical energy into mechanical energy, and this efficiency being determined as a function of the ignition angle deviation between an optimum ignition angle and a current ignition angle as well as a further variable which determines the ignitability, **characterized in that** the variable which represents the ignitability is the optimum ignition angle, and **in that** different characteristics of the efficiency over the ignition angle deviation are used to form the efficiency, which characteristics make a differently weighted contribution to determining the efficiency depending on the position of the optimum ignition angle.

10. Computer program with program-code means for carrying out all of the steps of any one of Claims 1 to 8 when the program is run on a computer.

11. Computer program product with program-code means, which are stored on a computer-readable data carrier, in order to carry out the method according to any one of Claims 1 to 8 when the program product is run on a computer.


**Revendications**

1.  Procédé de commande d'un moteur à combustion interne, selon lequel,
    on utilise un modèle de couple à l'aide duquel au moins une grandeur réelle de couple et/ou au moins une grandeur de réglage du moteur à combustion interne est calculée en fonction d'une grandeur prédéfinie,
    le modèle comprenant au moins une grandeur de base déterminée sous des conditions normées prédéfinies et corrigée en fonction du réglage réel du moteur à combustion interne,
    cette grandeur de base représentant un couple optimal corrigé avec un rendement pour la transformation de l'énergie chimique en énergie mécanique, et
    ce rendement est déterminé en fonction du décalage de l'angle d'allumage entre un angle d'allumage optimal et un angle d'allumage actuel et en fonction d'une autre grandeur représentant l'aptitude à la combustion du mélange,
    **caractérisé en ce que**
    la grandeur représentant l'aptitude à la combustion est l'angle d'allumage optimal, et pour former le rendement on utilise différentes caractéristiques du rendement sur le décalage de l'angle d'allumage qui contribuent avec des pondérations différentes à la détermination du rendement en fonction de la position de l'angle d'allumage optimal.

2.  Procédé selon la revendication 1,
    **caractérisé en ce que**
    l'angle d'allumage optimal est déterminé en fonction de la charge en air frais, du régime du moteur et d'au moins une autre grandeur.

3.  Procédé selon l'une quelconque des revendications précédentes,
    **caractérisé en ce que**
    l'autre grandeur est le taux de gaz inerte, la valeur lambda ou une grandeur pour le mouvement de la charge.

4.  Procédé selon l'une quelconque des revendications précédentes,
    **caractérisé en ce que**
    le couple de rotation optimal du moteur à combustion interne est corrigé en tenant compte du taux de gaz inerte et d'effets de mouvement de la charge.

**5.** Procédé selon la revendication 4,
**caractérisé en ce que**
la correction du couple de rotation optimal est fonction du taux de gaz inerte ainsi que de la position des soupapes d'admission et d'échappement.

**6.** Procédé selon l'une quelconque des revendications précédentes,
**caractérisé en ce que**
l'angle d'allumage optimal est corrigé en fonction du taux de gaz inerte et/ou d'effets de mouvement de la charge, ainsi que du point de fonctionnement actuel du moteur à combustion interne.

**7.** Procédé selon l'une quelconque des revendications précédentes,
**caractérisé en ce que**
l'angle d'allumage optimal est corrigé en fonction du taux de gaz inerte et de la position des soupapes d'admission ou d'échappement ou de la coïncidence des soupapes, ainsi que du point de fonctionnement actuel du moteur à combustion interne.

**8.** Procédé selon l'une quelconque des revendications précédentes,
**caractérisé en ce qu'**
une correction de l'angle d'allumage optimal s'effectue en outre en fonction de la valeur lambda et de la charge actuelle.

**9.** Dispositif de commande d'un moteur à combustion interne, comprenant une unité de commande, dans lequel un modèle de couple pour le moteur à combustion est enregistré à l'aide duquel au moins une grandeur réelle et/ou au moins une grandeur de réglage est déterminée en fonction d'une grandeur prédéfinie, dans le cadre du modèle au moins une grandeur de base est prévue et définie dans des conditions normées et corrigée en fonction de l'écart par rapport à ces conditions normées, la grandeur de base étant un couple de rotation optimal corrigé avec un rendement pour la transformation de l'énergie chimique en énergie mécanique, et ce rendement est déterminé en fonction du décalage de l'angle d'allumage entre un angle d'allumage optimal et un angle d'allumage actuel, et en fonction d'une autre grandeur représentant l'aptitude à la combustion,
**caractérisé en ce que**
la grandeur représentant l'aptitude à la combustion est l'angle d'allumage optimal, et pour former le rendement on utilise différentes caractéristiques du rendement sur le décalage de l'angle d'allumage qui contribuent avec des pondérations différentes à la détermination du rendement en fonction de la position de l'angle d'allumage optimal.

**10.** Programme informatique ayant des moyens de codage de programme pour effectuer toutes les étapes d'une quelconque des revendications 1 à 8 si le programme est exécuté sur un ordinateur.

**11.** Produit de programme informatique ayant des moyens de codage de programme stockés sur un support de données lisible par ordinateur pour effectuer toutes les étapes d'une quelconque des revendications 1 à 8 si le programme est exécuté sur un ordinateur.

Fig. 1

Fig. 2

Fig. 3

Fig. 6

Fig. 4

Fig. 5

EP 1 436 493 B1

Fig. 7

EP 1 436 493 B1